# EUROPEAN PATENT SPECIFICATION

(11) **EP 2 495 921 B1**
(45) Date of publication and mention of the grant of the patent: **20.12.2017**
(21) Application number: 11290109.5
(22) Date of filing: 28.02.2011
(51) Int. Cl.: H04L 25/03

(54) **Enhanced signal detection for distortion mitigation in optical transmission systems**
Verbesserte Signaldetektion zur Verzerrungsabschwächung in optischen Übertragungssystemen
Détection de signaux améliorée pour l'atténuation de la distorsion dans des systèmes de transmission optique

(43) Date of publication of application: 05.09.2012
(73) Proprietor: ALCATEL LUCENT, 92100 Boulogne-Billancourt (FR)
(72) Inventor: Renaudier, Jeremie, 91620 Nozay (FR); Dorize, Christian, 78320 Le Mesnil Saint Denis (FR); Bertran-Pardo, Oriol, 91620 Nozay (FR)
(74) Representative: Berthier, Karine

(56) References cited:
- US-A- 5 396 519
- US-A1- 2005 079 826
- US-A1- 2005 227 663
- US-A1- 2008 192 870
- US-B1- 6 470 047
- AGAZZI O E ET AL: "Maximum likelihood sequence estimation in the presence of chromatic and polarization mode dispersion in intensity modulation/direct detection optical channels", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 5, 20 June 2004 (2004-06-20), pages 2787-2793, XP010709741, DOI: 10.1109/ICC.2004.1313038 ISBN: 978-0-7803-8533-7
- CHUNMIN XIA ET AL: "PMD-induced nonlinear penalty reduction in coherent polarization-multiplexed QPSK transmission", OPTICAL COMMUNICATION (ECOC), 2010 36TH EUROPEAN CONFERENCE AND EXHIBITION ON, IEEE, PISCATAWAY, NJ, USA, 19 September 2010 (2010-09-19), pages 1-3, XP031789939, ISBN: 978-1-4244-8536-9
- KHAIRUZZAMAN M ET AL: "Fiber-nonlinearity equalization by maximum-likelihood-sequence estimation (MLSE) in digital coherent receivers", OPTOELECTRONICS AND COMMUNICATIONS CONFERENCE, 2009. OECC 2009. 14TH, IEEE, PISCATAWAY, NJ, USA, 13 July 2009 (2009-07-13), pages 1-2, XP031518587, ISBN: 978-1-4244-4102-0
- FORNEY G D: "MAXIMUM-LIKELIHOOD SEQUENCE ESTIMATION OF DIGITAL SEQUENCES IN THE PRESENCE OF INTERSYMBOL INTERFERENCE", IEEE TRANSACTIONS ON INFORMATION THEORY, IEEE PRESS, USA, vol. IT-18, no. 3, 1 May 1972 (1972-05-01) , pages 363-378, XP000676128, ISSN: 0018-9448, DOI: 10.1109/TIT.1972.1054829

## Description

The present document relates to optical transmission systems. In particular, the present document relates to a system and method for detecting symbols at an optical receiver from an optical signal which has been submitted to distortion in an optical transmission medium.

High spectral efficiency optical communication systems are required to answer the foreseen demand for capacity increase. Multi-level modulation formats combined with polarization multiplexing as well as digital coherent detection techniques are extensively investigated. At 100Gb/s, a consensus has been reached on polarization division multiplexed quadrature phase shift keying (PDM-QPSK) paired with coherent detection that appears a very promising solution. This format yields a spectral efficiency of 2b/s/Hz in a standard transmission system based on a 50GHz grid.

One possible approach to increase spectral efficiency of 100Gb/s systems is to use higher levels modulation formats like PDM-8QAM, PDM-16QAM and higher. However, such formats have a lower sensitivity to optical noise and a weaker tolerance to nonlinear effects, which together yield a reduction of transmission reach compared to PDM-QPSK.

Another approach may be to further increase the spectral efficiency of 100Gb/s systems by tightly packing conventional WDM channels. In other words, the grid of the WDM channels may be reduced, i.e. the frequency spacing between adjacent WDM channels may be reduced. Transmissions with 3b/s/Hz or 4b/s/Hz spectral efficiency may be achieved using 100Gb/s PDM-QPSK channels over a 33GHz and 25GHz-grid respectively.

The approach of using tighter WDM grids may be further improved by the use of flexible grid WDM systems, in order to optimize the bandwidth occupancy depending on the trade-off between the transmitted capacity and the transmission reach. Particularly, a semi-flexible system architecture may be set up having a granularity of e.g. 12.5GHz (starting from an ITU grid) to define channel slots, instead of having a fixed 50GHz grid. This would enable to vary channel packing depending on an optimized trade-off between optical path impairments and required capacity.

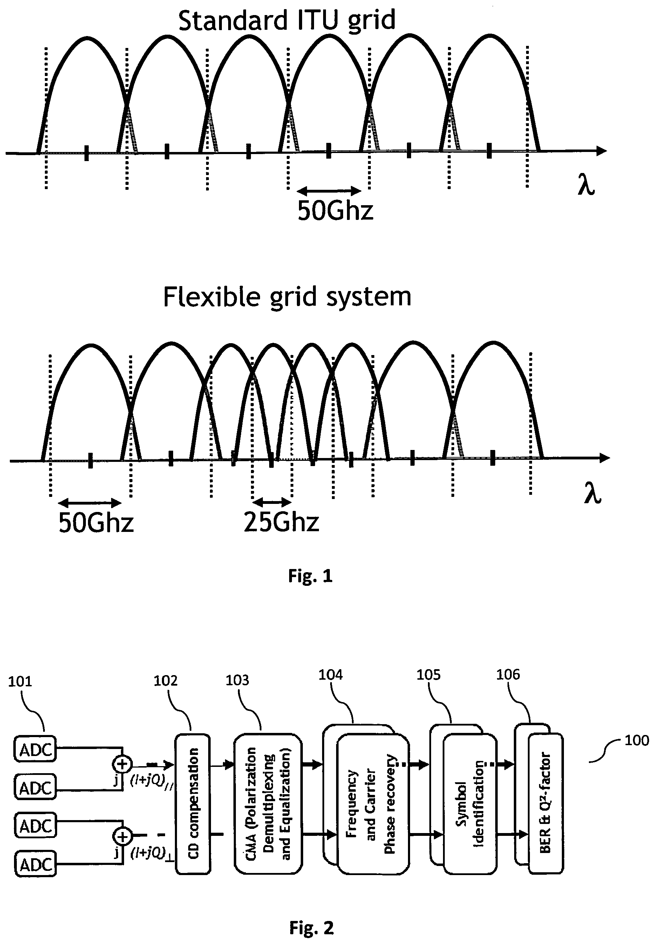

An example implementation of a flexible grid system is shown in Fig. 1. The upper diagram shows a conventional fixed WDM grid with a spacing of 50GHz. The lower diagram shows a flexible grid system comprising WDM channels with a varying granularity, e.g. a granularity of 25GHz or 50GHz, depending on the wavelength A. Each WDM channel may carry 100 Gb/s channels. When the spectral grid gets tighter and/or when using larger overheads, the spectral information of adjacent channels tend to overlap (as shown in the lower diagram of Fig. 1). This typically leads to a QoT (Quality of Transmission) decrease for the WDM channels which are concerned by the channel overlap.

An inherent drawback of tightly filtering WDM channels is the increase of intersymbol interference (ISI) and cross-talk penalties. Consequently, it is important in the context of the development of ultra-dense WDM packing in optical networks to have receivers that have an increased performance under such conditions, i.e. under channel conditions with high ISI and cross-talk penalties.

A further approach to increase the spectral efficiency of optical transmission systems such as 100 Gb/s systems is the use of multimode fibres. This approach may be used standalone or in addition to a fixed or flexible WDM grid. The use of multimode fibres may be used to at least partially overcome the nonlinear limitations of single mode transmission systems.

Multimode fibres may be exploited mainly for two different purposes: a) to increase system capacity by using different modes to transmit different information and b) to reduce the reach limitation induced by nonlinearities when transmitting a single mode. These benefits may be achieved due to a larger effective area of multimode fibres compared to single-mode fibres.

On the other hand, because multi-mode fibres have a larger core-size than single-mode fibres, they support more than one propagation mode; hence the transmission with multi-mode fibres may be limited by modal dispersion, unlike the transmission with single mode. Such modal dispersion typically originates from different propagating speeds of different optical modes at the same wavelength supported by the multimode fibre. Modal dispersion acts as an in-band distortion to optical signals transmitted over a multimode fibre. Furthermore, as already outlined above, in a WDM transmission, the signal also suffers from crosstalk induced by co-propagating wavelength channels, as depicted in Fig. 1.

In order to compensate the above mentioned distortions in optical transmission systems and to thereby increase the spectral efficiency of the optical transmission system, the present document suggests the use of detection schemes which are based on the observation of a sequence of received symbols. Such detection schemes are well-suited for detecting signals which have been submitted to tightly filtered optical channels and/or channels which suffer from in-band distortions such as modal dispersion or in-band cross-talk generated at optical nodes coming from co-propagating channels. When the transmitted signal has memory due to the tight filtering within the tightly packed WDM channels, i.e. when the signals transmitted in successive symbol intervals are interdependent, the optimum detector is indeed a detector that bases its decisions on the observation of a sequence of received signals over successive signal intervals. In that respect, the use of a maximum a posteriori probability algorithm is proposed. This algorithm makes symbol-by-symbol decisions based on the observation of a received sequence of symbols. However, such an implementation focuses only on the ISI penalties of the received channel and is not offering optimal performance with respect to the impact of adjacent WDM slots.

As such, the present document addresses the particular issue of a detection scheme which takes into account the cross-talk or interference between adjacent WDM channels and/or the in band distortions caused by modal dispersion or nodes. This is particularly relevant for WDM systems having a reduced channel spacing between adjacent WDM channels and/or WDM systems using multimode fibers.

Agazzi O. E. et al., "Maximum likelihood sequence estimation in the presence of chromatic and polarization mode dispersion in intensity modulation/direct detection optical channels", 2004 IEEE International Conference on Communications; ICC 2004, 20-24 June 2004, Paris, vol. 5, pages 2787-2793, describes the use of Maximum Likelihood Sequence Estimation in the context of optical transmission channels. US6470047 describes an interference reduction module which analyses a received wireless signal and which attempts to determine the type of interference present in the signal. US2008/0192870 describes the application of an input noise whitening filter to a wireless signal received at a mobile station. US2005/0079826A1 describes a method and apparatus for reducing interference in a received signal. US2005/0227663A1 describes a method for identifying colored interference. US5396519 describes a method for compensating additive white noise and proportional noise in a communication channel.

According to an aspect, a detection unit configured to detect a symbol from a received digital signal is described. The received digital signal may have been derived from an optical signal which has been transmitted over a first optical transmitted channel (which may also be referred to briefly as an optical channel) and which has been submitted to noise. In particular, the digital signal may have been derived from the optical signal using coherent optical detection which translates into the electrical domain all the characteristics of the optical signal. In other words, the received digital signal may have been obtained from an optical signal which has incurred distortions (i.e. noise) during the transmission via the first optical transmitted channel, e.g. a WDM channel transmitted over an optical fiber. Alternatively or in addition, the optical transmitted channel may be a certain optical mode of a multi-mode fiber. As such, the optical transmitted channel may be a particular optical mode transmitted over a multi-mode fiber at a particular WDM wavelength.

The detection unit may comprise a noise whitening filter unit. The noise whitening filter unit may be configured to filter the received digital signal using a noise whitening filter. The noise whitening filter may be configured to whiten the noise. That is, the noise of the received digital signal at the input of the noise whitening filter may be colored, i.e. the noise may have a power spectral density which is not flat. At the output of the noise whitening filter unit, the noise of the received digital signal may be whitened, i.e. its power spectral density may have been flattened compared to the power spectral density of the noise at the input of the noise whitening filter unit.

For this purpose, the noise whitening filter may be based on an estimate of the power spectral density of the noise. The noise whitening filter may be a finite impulse response filter comprising N filter coefficients. The N filter coefficients may be determined based on the estimate of the power spectral density of the noise at the input of the filter unit and/or at the output of the filter unit. The estimate of the power spectral density of the noise may be determined based on characteristics of the first optical transmitted channel and/or optical transmitted channel(s) adjacent to the first optical transmitted channel.

The detection unit may further comprise a maximum likelihood sequence (MLSE) detector, downstream of the noise whitening filter unit. The MLSE detector may be configured to detect the symbol from the filtered digital signal at a given time instant, while taking into account the information carried by one or more symbols of one or more previous time instants. In particular, the MLSE detector may be configured to execute a Viterbi algorithm in order to detect the symbol.

The estimate of the power spectral density of the noise may be determined based on one or more of: characteristics of the first optical transmitted channel; characteristics of a lower adjacent optical transmitted channel, using a wavelength lower than a wavelength of the optical transmitted channel; and/or characteristics of a higher adjacent optical transmitted channel, using a wavelength higher than the wavelength of the optical transmitted channel. By way of example, the optical transmitted channels may be WDM channels of an optical WDM signal. As such, the lower adjacent optical transmitted channel, the first optical transmitted channel and the higher adjacent optical transmitted channel may correspond to three adjacent, e.g. directly adjacent, WDM channels on a WDM grid. Alternatively or in addition, adjacent optical transmitted channels may be different optical modes within a multi-mode fiber.

The characteristics of the optical transmitted channels which are used to determine the estimate of the power spectral density may be one or more of: baud rate of the transmitted channel, bandwidth of the transmitted channel, modulation scheme of the transmitted channel, and/or channel width of the transmitted channel.

The detection unit may comprise a filter library, wherein the filter library may comprise a plurality of noise whitening filters associated with a plurality of estimates of the power spectral density of the noise, respectively. Alternatively or in addition, the plurality of noise whitening filters may be associated with a plurality of combinations of characteristics of the first optical transmitted channel, the lower adjacent optical transmitted channel and/or the higher adjacent optical transmitted channel. By way of example, the filter library may be a look up table allowing the look up of a particular noise whitening filter in dependence of combinations of the characteristics of the first optical transmitted channel, the lower adjacent optical transmitted channel and/or the higher adjacent optical transmitted channel.

The detection unit may comprise a characteristics reception unit configured to receive information on the characteristics of the optical transmitted channel(s). Such information on the characteristics of the first, the lower adjacent and/or the higher adjacent optical transmitted channels may be received from a control plane of the optical transmission network. Furthermore, the detection unit may comprise a filter selection unit configured to select the noise whitening filter from the filter library based on the received characteristics.

The detection unit may further comprise an interference estimation unit configured to determine an estimate of the interference causing the coloring of the noise. This estimate of the interference causing the coloring of the noise may be based on the characteristics of the first optical transmitted channel and/or the characteristics of the lower adjacent and/or the higher adjacent transmitted channel. Alternatively or in addition, the estimate may be determined based on measurements on a predetermined transmitted signal, e.g. a predetermined pilot tone, as outlined in the following.

According to an example useful for understanding the present invention, the received digital signal may comprise a predetermined pilot tone. The pilot tone of the received digital signal may be orthogonal with respect to one or more pilot tones transmitted via adjacent optical transmitted channels. The adjacent optical transmitted channels may be different optical modes of a multi-mode fiber. Alternatively or in addition, the adjacent optical transmitted channels may be transmitted via adjacent, e.g. directly adjacent, WDM wavelengths. As the pilot tones of different optical transmitted channels are orthogonal with respect to one another, the detection unit may distinct the predetermined pilot tone of the received digital signal from the noise caused by the orthogonal pilot tones of adjacent optical transmitted channels.

According to the example useful for understanding the present invention, the detection unit may comprise a pilot tone subtraction unit configured to identify the predetermined pilot tone and to subtract the predetermined pilot tone from the received signal, thereby yielding a residual signal. Furthermore, the detection unit may comprise a noise analysis unit configured to determine the estimate of the power spectral density of the noise based on a power spectral density of the residual signal. Based on the power spectral density of the residual signal, the noise whitening filter, e.g. the coefficients of such a filter, may be determined in a filter determination unit.

The detection unit may further comprise an equalizing unit upstream of the noise whitening filter unit. The equalizing unit may be configured to compensate chromatic distortion and/or polarization mode dispersion incurred by the optical signal in the first optical transmitted channel. Furthermore, the detection unit may comprise a polarization de-multiplexing unit upstream of the noise whitening filter unit. The polarization de-multiplexing unit may be configured to de-multiplex multiple polarizations of the optical signal.

According to a further aspect, an optical receiver, e.g. a coherent optical receiver, configured to detect a symbol from a received optical signal is described. The received optical signal may have been transmitted over a first optical transmitted channel and may have been submitted to noise. The receiver may comprise a reception unit configured to convert the optical signal into a (electrical) digital signal and a detection unit according to any of the aspects outlined in the present document. In particular, the detection unit may be configured to detect the symbol from the digital signal.

According to another aspect, an optical network is described. The optical network may comprise a first optical transmitted channel configured to transmit an optical signal, wherein the optical signal is submitted to noise. Furthermore, the optical network may comprise a control plane. The control plane may be configured to gather and/or provide information on an estimate of a power spectral density of the noise. In particular, the control plane may have information on characteristics of the first optical transmitted channel and/or optical transmitted channels adjacent to the first optical transmitted channel, e.g. the lower adjacent and/or the higher adjacent optical transmitted channel. Furthermore, the optical network may comprise an optical receiver according to any of the aspects outlined in the present document. The optical receiver may be configured to detect a symbol from the optical signal.

According to another aspect, a method for detecting a symbol from a received digital signal is described. The digital signal may have been derived from an optical signal transmitted over a first optical transmitted channel and may have been submitted to noise. The method may comprise filtering the received digital signal using a noise whitening filter, wherein the noise whitening filter is configured to whiten the noise, and wherein the noise whitening filter is based on an estimate of a power spectral density of the noise. Furthermore, the method may comprise detecting the symbol from the filtered digital signal at a given time instant using maximum likelihood sequence detection, while taking into account one or more symbols of one or more previous time instants.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present patent application may be used stand-alone or in combination with the other methods and systems disclosed in this document.

The claimed subject-matter is explained below in an exemplary manner with reference to the accompanying drawings, wherein
Fig. 1 illustrates an example flexible WDM grid system;
Fig. 2 illustrates an example signal processing of a coherent optical receiver;
Fig. 3 shows an example coherent optical receiver using a whitening filter unit and MLSE processing;
Fig. 4 shows an example power spectral density of the noise in a WDM channel;
Fig. 5 illustrates different optical modes of an example WDM signal transmitted over a multi-mode fiber;
Fig. 6 illustrates an example setup of an optical coherent receiver for WDM signals transmitted over a multi-mode fiber; and
Fig. 7 shows an example block diagram of a method for determining a noise whitening filter using a pilot tone.

MLSE is an effective solution to compensate filtering issues incurred by a signal when transmitted over a transmission path. It is particularly useful for the compensation of signal distortions which lead to interdependencies between successive transmitted symbols, e.g. intersymbol interference (ISI).

In optical communication systems, the filtering effects of the optical path such as CD (chromatic dispersion) and PMD (polarization mode dispersion), i.e. the linear transfer function of the optical path or optical channel, can typically be fully compensated by FIR (finite impulse response) filters. This is due to the fact that the distortions caused by the linear distortion effects CD and PMD can be well modeled by all pass filters, i.e. filters which will only delay some specific spectral components of the signal without changing the amplitude of the spectral components. In other words, the submission of the transmitted optical signal to the above mentioned linear distortion effects do not lead to a loss of information. On the other hand, if low pass filters, such as an optical filter at the transmitter side and/or analog bandwidth limitations of ADCs at the receiver side and/or band limitation of the optical transmission channel, are present in the optical channel, the modeling of the transfer function using FIR filters becomes less effective. This applies in a similar manner to the distortions caused by modal dispersion in multimode fibers.

In order to detect a symbol from a received signal, an optical receiver (e.g. a coherent optical receiver) comprises various stages of digital signal processing. An example digital signal processing 100 is depicted in Fig. 2 for a coherent optical receiver of a polarization multiplexed (PMD) signal. CD compensation 102 follows 4 ADCs (analog-to-digital converters) 101 (corresponding to two sets of ADCs for each polarization). Subsequently, a CMA (constant modulus algorithm) algorithm is used for polarization de-multiplexing and equalization 103. As an outcome, two distinct polarization de-multiplexed signals are obtained. These signals are submitted to frequency and carrier phase estimation and compensation processing 104 in the following. Finally, the compensated signals are passed to symbol identification units 105, where the data samples are detected using the constellation associated with the underlying modulation scheme, e.g. QPSK. The quality of the overall transmission system may be measured using BER (bit error rate) or Q²-factor quality measures (reference sign 106).

An MLSE detection scheme may be combined with linear equalization using FIR filters. It has been found that in optical communication, MLSE detection is particularly effective if several processing steps are performed prior to MLSE detection. As such, it is preferable to perform chromatic dispersion compensation 102 subsequent to analog-to-digital conversion 101 and prior to MLSE detection.

As outlined above, MLSE processing may be used to detect the interdependence between successive symbol intervals (caused by ISI) by performing the symbol identification on a sequence of received symbols. However, when using tightly spaced WDM channels and/or when using multimode fibers for the transmission, this not only impacts the inter symbol interference. The use of a reduced WDM channel spacing also impacts the cross-talk between adjacent WDM channels. This cross-talk will lead to an increased noise contribution within a particular WDM channel caused by adjacent WDM channels. In a similar manner, the use of multimode fibers leads to modal dispersion which leads to an increased noise contribution to the particular WDM channel.

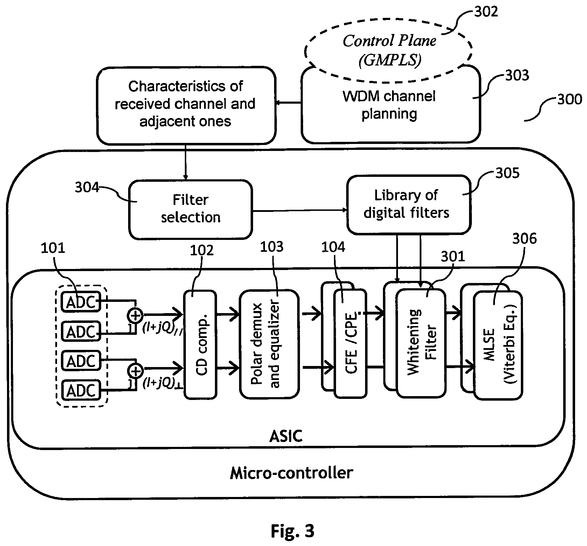

In view of the above, it is proposed to use a maximum likelihood sequence detector 306 together with a whitening filter stage 301 (see Fig. 3). The whitening filter stage may be used to whiten the noise caused in a particular WDM channel by its adjacent WDM channels and/or by the modal dispersion. In particular, it is suggested to use a whitening filter stage 301 which whitens the noise of the received signal and thereby improves the performance of the subsequent MLSE detector 306.

The maximum likelihood sequence detector 306, i.e. the estimation of a sequence of symbols, can be processed through the Viterbi algorithm. Details on MLSE detection schemes are described in the documents Forney, G., Jr., "Maximum-likelihood sequence estimation of digital sequences in the presence of intersymbol interference," Information Theory, IEEE Transactions on , vol.18, no.3, pp. 363-378, May 1972, or Forney, G.D., Jr., "The viterbi algorithm," Proceedings of the IEEE, vol.61, no.3, pp. 268-278, March 1973 or Digital Communications, John G. Proakis, 4th edition (New York: McGraw Hill), chapter 10, for which the sections on MLSE are incorporated by reference.

The Viterbi algorithm theoretically requires a white Gaussian noise at the input in order to perform optimally. It is therefore suggested to perform a per channel choice of the whitening filter and to apply the whitening filter to the received signal prior to MLSE processing 306. The selection of the whitening filter may not only depend on the processed channel slot, but also on the characteristics of adjacent WDM slots. In the following, the design of an appropriate noise whitening filter will be outlined for the situation where a flexible WDM grid is used. It will be outlined that in such case, it is beneficial that the filter depends on the characteristics of the received WDM channel and on the characteristics of its adjacent WDM channels. Subsequently, whitening filter design methods will be described which may be used when transmitting optical signals over multimode fibers. It should be noted that in a combined scenario the whitening filters may be designed by a combination of both design methods.

It is assumed that knowledge is available about the characteristics of the received channel, i.e. of the channel from which data symbols are to be recovered. The characteristics may relate to the underlying modulation format and the transmitted bandwidth. Furthermore, knowledge of the characteristics of the left and/or right neighboring channels of the received channel may be available. This is applicable in the case of point-to-point transmission systems. Furthermore, this is applicable in the case of reconfigurable networks involving switching nodes distributed along the network. In the latter case, the characteristics of the receiving channel and its neighboring channels typically change in case of a reconfiguration of the network.

In case of reconfigurable optical networks, the neighboring channels of a received channel change along the transmission path. The characteristics of the neighboring channels may be the average characteristics of all the transient neighboring channels of the received channel along the transmission path. The average may take into account the length of the partial transmission path along which a certain transient neighboring channel was adjacent or neighboring to the received channel. On the other hand, the characteristics of the neighboring channels may be dominated by a subset of the transient neighboring channels. In particular, the characteristics of the left neighboring channel may be dominated by the most impacting left transient neighboring channel and/or the characteristics of the right neighboring channel may be dominated by the most impacting right transient neighboring channel. The most impacting channel may be determined by a comparison of the transient neighboring channels with respect to the length of the partial transition path, and/or the modulation format, and/or the bit rate, and/or the channel width.

This information regarding the characteristics of the different transmitted channels and the current network configuration may be passed to or may be available at a control plane 302 shown in Fig. 3. By using the information available at the control plane 302, a combination, e.g. a linear combination, of the interferences incurred by a particular channel along the optical path can be derived. In particular, the most impacting adjacent interferers, e.g. the left and right adjacent WDM channels, may be identified based on the characteristics of the adjacent channels (e.g. based on the modulation formats and bandwidth of the adjacent channels). The information regarding the interference situation on a particular WDM channel, caused by its adjacent WDM channels may be determined in a WDM channel planning unit 303. As outlined above, the interference situation is determined based on the knowledge on the characteristics of the particular WDM channel and its neighboring channels (and/or its transient neighboring channels).

The information regarding the interference situation may be transmitted within the control plane, typically using GMPLS (Generalized Multiprotocol Label Switching). The information may be transmitted off-line in a static network or on-line periodically in a dynamic network environment. As depicted in the block diagram in Fig. 3, this information may be used to select the most appropriate noise whitening filter among the ones available in a library of digital filters stored in a LUT (Look up table). In other words, the information regarding the current interference situation may be used by a filter selection unit 304 to select an appropriate whitening filter. A list of available whitening filters may be stored in a library of available filters 305. The selected filter may then be loaded into the signal processing unit 300 of the (coherent) optical receiver, e.g. through a micro-controller. In particular, the selected filter may be loaded into a whitening filter unit 301 upstream of the MLSE detector 306.

Once the control plane 302 has transmitted the characteristics of the received channel and those of its left and right neighboring channels, the filter which is to be applied to the received channel within the whitening filter unit 301 is selected from a Look-Up Table (LUT) among a list of predetermined digital filters 305. In other words, the filtering selection module 304 chooses the optimal filter to be used in the optical receiver according to the characteristics (e.g. the baud rate, modulation format, bandwidth, channel width, etc.) of the received channel and its adjacent channels provided by the WDM channel planning unit 303.

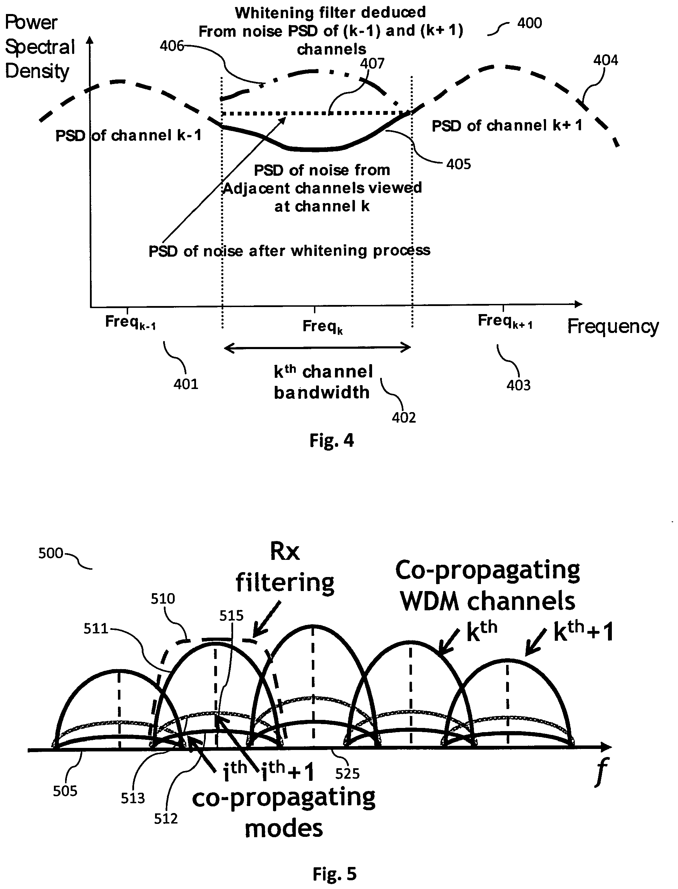

The list of digital filters 301 may be made up of whitening filters which are predetermined as a function of the characteristics of the received channel and as a function of its surrounding channels. Such filters aim at whitening noise within the received signal in order to optimize the result of the following maximum likelihood sequence detector. This is illustrated in Fig. 4.

As outlined above, the whitening filter 301 copes with the noise within a received WDM channel, which is caused by the interference with its adjacent WDM channels. The whitening operation performed by the whitening filter 301 is directed at improving the performance of the equalization stage 306, which is typically performed by a Viterbi equalizer. As already indicated, the equalization through the Viterbi algorithm is altered when the spectral density of the additive noise viewed at the equalizer input 306 moves away from a white Gaussian noise. Therefore, it is suggested in the present document to add a (further) noise component to the received signal, in order to whiten the initial noise caused by adjacent channels of the received channel.

Fig. 4 illustrates example power spectral densities 400 of the noise 404 in a WDM channel k (reference numeral 402), as well as in its neighboring channels k-1 (reference numeral 401) and k+1 (reference numeral 403). It can be seen that as a result of the interference of the adjacent channels k-1, k+1, the power spectral density 405 of the noise in channel k is not constant. It can be considered as if the noise within channel k is colored. The whitening filter 301 may be used in order to add additional noise having a power spectral density 407, such that the resulting noise at the output of the whitening filter 301 has a constant power spectral density 405. As a result, the output signal of the whitening filter 301 comprises the signal which is to be detected, plus white Gaussian noise, in contrast to the input signal of the whitening filter 301 which comprises the signal which is to be detected, plus colored noise.

The use of a pre-whitening filter 301 leads to an improvement of the bit error rate at the output of the maximum likelihood sequence detector 306, despite of an increase of the overall additive noise energy.

The whitening filters 301 may be calculated by means of various spectral inversion methods, such as the Levinson-Durbin method. For this purpose, the knowledge of the power spectral density 404 of the noise within the adjacent channels viewed from the bandwidth of the received channel should be known. As indicated above, a plurality of whitening filters 301 may be determined a priori. These filters 301 may be determined based on the noise spectral density according to various spectral shapes of adjacent channel. The plurality of whitening filters 301 can be stored in the Look-Up Table 305 and can be applied to the received signal prior to the MLSE detection stage 306. The stored digital filters within the library 305 correspond to an appropriate trade-off between noise whitening and signal-to-noise ratio decrease for each situation regarding the different possible characteristics of the received channel and its surrounding channels. For the possible situations, a precalculated filter is stored, typically as an N taps Finite Impulse Response (FIR) filter. The filter may be conveniently performed through a convolution operation in the time domain (or a multiplication in the frequency domain) between the digital data flow and the selected FIR filter. The whitening filter operation 301 should be performed before the maximum likelihood sequence detector 306 within the (coherent) optical receiver.

The flexibility brought by the architecture shown in Fig. 3 allows for rapid switching from one filter shape to another one among those stored in the filter library 305. The architecture is therefore in line with the future dynamic and flexible optical networking evolutions and can match any change in the modulation format and bandwidth of the current channel and/or of its adjacent channels.

In order to cope with the foreseen demand for capacity increase, tight filtering and multilevel modulation formats using coherent receivers are likely to be widely used in future optical networks. The impact of adjacent channels onto the performance of the maximum likelihood sequence detector 306 will thus become detrimental. The present document proposes a flexible solution to manage this effect. In particular, it is proposed to exploit the knowledge about the characteristics of the received channels and its adjacent channels, which may be available e.g. at the network control plane. This knowledge is used to improve the performance of coherent receivers using a maximum likelihood sequence detector. By using a library of pre-determined whitening filters 305, the optical receiver can be adapted rapidly to changing network and interference situations. This is particularly beneficial in the context of dynamic reconfigurable networks based on a flexible grid.

By optimally managing the mitigation of ISI penalties, the described method and system yields an improvement of the Quality of transmission for each WDM channel whatever the characteristics (bandwidth, modulation format, etc.) of the channel itself and of the neighboring channels.

As outlined above, the use of multimode fibers is a further approach to increasing the spectral efficiency of optical transmission systems. This approach may be used standalone or in addition to the other approaches outlined in the present document. It is proposed to use fibres with effective areas larger than standard single mode fibres such as multi-mode fibres. Such multimode fibres may be used to reduce the nonlinear limitations of complex modulation schemes and therefore to maintain the maximum obtainable reach with complex modulation formats.

However, multi-mode fibres have higher pulse spreading rates than single mode fibres due to modal dispersion which limits a multi-mode fibre's information transmission capacity. In fact, the limit on "bit-rate times distance" of multi-mode fibres has been typically lower compared to single-mode fibres, when considering direct-detection. Hence, the application range of multi-mode fibres has been limited to short distances (<1,000 m), while single-mode fibres were used to reach much longer distances.

However, this situation changes, when using coherent optical detection. Coherent detection offers access to all the characteristics of the optical field (amplitude, phase and polarization) and therefore may bring solutions to efficiently use multi-mode fibers. This may be achieved based on an appropriated digital signal processing (DSP) at the optical receiver.

A method to optimize the transmission over multi-mode fibers is proposed based on appropriate digital signal processing through enhanced noise analysis. In a WDM multi-mode transmission system, the channel is not only affected by the cross-talk of different wavelength channels, but also by co-propagating modes, as depicted by the channel diagram 500 in Fig. 5. Fig. 5 illustrates a plurality of WDM channels 505, 515, 525 similar to the WDM channels illustrated in Fig. 1. Fig. 5 also illustrates the passband filtering 510 of WDM channel 515 performed at the optical receiver. Furthermore, Fig. 5 shows the primary optical mode 511, as well as a plurality of co-propagating modes 512, 513. It can be seen that the plurality of modes of the adjacent / neighboring WDM channels 505, 525 interfere with the modes 511, 512, 513 of the received WDM channel 515.

In a similar manner to the cross-talk caused by tightly packed WDM channels, it is proposed to mitigate the penalties brought by the cross-talk sources of multimode fibers through appropriate signal processing, using for example maximum likelihood sequence estimation (MLSE) with a Viterbi algorithm. In a similar manner, it is proposed to analyze the "noise" of the incoming optical spectrum and to determine a noise whitening filter which whitens the noise of the received signal prior to MLSE detection 306.

The whitening filters may be determined based on pilot tones inserted into the signal of a WDM channel prior to transmission, in order to estimate different sources of cross-talk that may result in performance penalty. The results of the analysis of the received pilot tones may be used to optimize key parameters of the coherent receiver and to adjust its settings.

The knowledge of some key quantities, revealed by spectral analysis, may be used to take countermeasures for the correction or mitigation of impairments, like cross-talk induced by other wavelength channels and other co-propagating modes. In a similar manner to tightly spaced WDM channels, it is propose to design whitening filter based on the analysis of the noise power spectral density function (PSD). As outlined above, the whitening filter will optimize the operation of the maximum likelihood sequence estimation (MLSE) 306 with Viterbi algorithm.

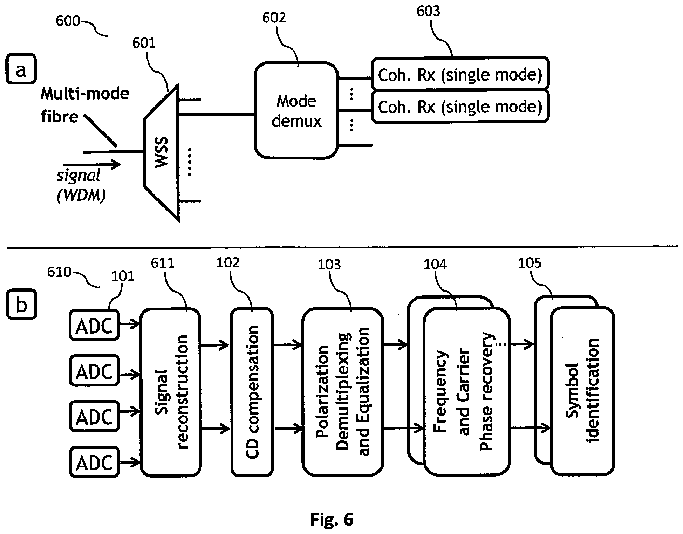

The spectral analysis of the noise is an important information brought by coherent receivers since coherent receivers offer access to all the characteristics of the received optical field. Fig. 6a describes a possible scheme for detection in a coherent receiver 600 of an optical signal which has propagated over a multi-mode fibre. The different wavelength channels are separated by a wavelength selective switch (WSS) 601. Subsequently, the different modes 511, 512, 513 of the multimode fibre are de-multiplexed in a mode de-multiplexing unit 622. Finally, the different modes 511, 512, 513 are detected by single mode coherent receivers 603. In such a detection scheme, a non-optimal mode de-multiplexing 602 causes in-band distortion due to co-propagating modes, as depicted in Fig. 5. These in-band distortions have to be dealt with by the digital signal processing in the single mode coherent receivers 603.

Fig. 6b illustrates the main parts of the DSP realized in a coherent receiver 603. These parts have already been outlined in the context of Fig. 2. In a first step, the received signal is reconstructed in a signal reconstruction unit 611 using the information provided by the coherent mixer. Subsequently, digital chromatic dispersion mitigation 102, polarization demultiplexing and equalization 103, and frequency and carrier phase recovery 104 is performed. Once these steps have been performed, symbols can be identified 105 and thus the information is decoded.

As has been outlined before, the use of MLSE detection 306 for symbol identification 105 may be beneficial for compensating the modal distortions caused within the multimode fibre. Furthermore, it has been outlined that in order to improve the performance of MLSE detection 306, it is proposed to whiten the noise of the received signal prior to performing MLSE detection. For this purpose, an estimate of the noise power-spectral density (PSD) of the received signal may be determined, in order to subsequently determine an appropriate noise whitening filter.

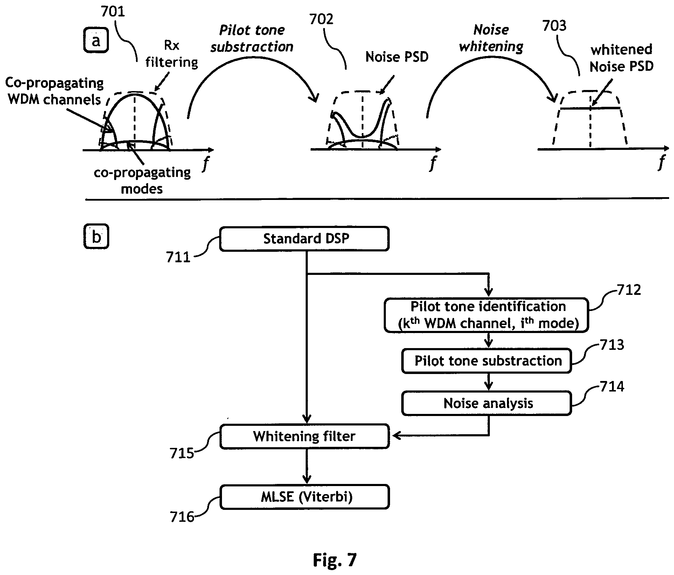

The noise power-spectral density of the received signal may be estimated as outlined in the context of Fig. 7. It is proposed to insert orthogonal pilot tones within each transmitted signal to efficiently determine the noise spectral analysis. In other words, it is suggested to insert a different pilot tone for each co-propagating mode within a WDM channel. The pilot tones attributed to the different co-propagating modes may be orthogonal with respect to one another, thereby allowing the different pilot tones to be isolated at the optical receiver. Alternatively or in addition, the pilot tones of adjacent WDM channels may be orthogonal with respect to one another.

The orthogonal pilot tones are known at the optical receiver and may therefore be deducted from the received signal. This is illustrated in Fig. 7a. The power spectrum 701 of the received signal comprises contributions of the pilot tone, as well as contributions from the different optical modes of the adjacent WDM channels and the co-propagating modes of the received WDM channel. In view of the fact that the spectrum of the pilot tone is known at the receiver, it may be subtracted from the power spectrum of the received signal, thereby yielding the noise power-spectral density 702. Knowing the noise power-spectral density 702, an appropriate noise whitening filter may be determined (based on the inverse of the noise power-spectral density 702). If the noise whitening filter is applied to the received signal, a received signal comprising a whitened noise power-spectral density 703 will be obtained.

Fig. 7b shows the block diagram of an example coherent receiver comprising noise spectral analysis in combination with MLSE detection. Once the signal is detected (e.g. subsequent to the conventional signal processing 711, i.e. subsequent to the processing of units 102, 103, 104, 105, in a first step 712 the sent pilot tone may be identified. Since the pilot tone of the signal of interest is known (and orthogonal to the pilot tone of other signals), it can be subtracted from the received signal (step 713). Subsequently, the signal spectrum within the receiver bandwidth is reconstructed, thereby obtaining the power spectrum density (PSD) of the "noise". This noise-term may be due to several sources such as amplified spontaneous emission (ASE), but it may also be due to co-propagating wavelength channels and co-propagating modes (both at the same and at different wavelengths).

As outlined above, MLSE detection 306 with Viterbi performs optimally when the noise of the received signal is white. Therefore, it is suggested that the noise is digitally whitened in order to mitigate the impact of the colored noise term. After analyzing the spectrum of the noise (step 714), a whitening filter 715 may be designed in order to make the noise white. The filter may be designed by inversion techniques, as described above.

It should be noted that the proposed method does not require knowledge about the source of the cross-talk. The proposed method only requires the use of a known pilot tone which is received at the optical receiver. This is not an issue since the inclusion of pilot tones may be required for other purposes (also for other channel estimation purposes) and the same pilot tones could be used for the estimation of the PSD.

Furthermore, it should be noted that the whitening of the noise may decrease the original signal to noise ratio. Nevertheless, this operation usually leads to an improvement of performance at the output of the MLSE detection, since MLSE detection performs optimally when the noise is white. As already indicated above, the optimum whitening filter may be a trade-off between noise whitening and signal to noise ratio reduction.

In addition, it should be noted that even though the determination scheme of the whitening filter based on an inserted pilot tone has been outlined in the context of multimode fibres, the method may be applied to the mitigation of the impact of in-band distortions in transmission networks using single-mode fibres. In particular, the pilot tone based filter determination scheme may be used in combination with the filter look-up table approach outlined in the context of Fig. 3. As a matter of fact, the noise power spectral density determined through the use of the pilot tone may be considered to be a further characteristic of the optical transmitted channel. As such, the noise power spectral density may be used in combination with other characteristics (e.g. bandwidth, modulation scheme, channel spacing) of the received channel and/or other characteristics (e.g. bandwidth, modulation scheme, channel spacing) of the neighbouring channels, in order to select an appropriate noise whitening filter from the library of digital filters 305.

In the present document various methods and systems for symbol identification in optical coherent receivers have been described. The methods and systems are particular useful for the processing of optical signals which have been transmitted over tightly spaced WDM channels and/or over multimode fibres. The use of tightly spaced WDM channels and/or the transmission over multimode fibres causes significant cross-talk from adjacent WDM channels and/or from co-propagating optical modes. The methods and systems outlined in the present document effectively mitigate the distortions caused by such cross-talk. The proposed methods and systems are based on the use of MLSE detection in combination with noise whitening filters. The noise whitening filters are determined based on appropriate estimates of the noise power spectrum density.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the
invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A detection unit (300) configured to detect a symbol from a received digital signal, wherein the digital signal has been derived from an optical signal transmitted over a first optical transmitted channel, and submitted to noise, the detection unit (300) comprising:
- a characteristics reception unit (306) configured to receive information on characteristics of the first optical transmitted channel; on characteristics of a lower adjacent optical transmitted channel, using a wavelength lower than a wavelength of the optical transmitted channel; and on characteristics of a higher adjacent optical transmitted channel, using a wavelength higher than the wavelength of the optical transmitted channel; wherein the characteristics are one or more of: baud rate, bandwidth, modulation scheme of a transmitted channel;
- a filter library (305) comprising a plurality of noise whitening filters associated with a plurality of estimates of the power spectral density of the noise, respectively; wherein the filter library (305) is a look up table allowing the look up of a particular noise whitening filter in dependence of combinations of characteristics of the first optical transmitted channel, the lower adjacent optical transmitted channel, and the higher adjacent optical transmitted channel; wherein a particular noise whitening filter which is associated with a particular estimate of the power spectral density is configured to whiten noise having the particular estimate of the power spectral density;
- a filter selection unit (304) configured to select a noise whitening filter from the filter library (305) in dependency of the combination of the received characteristics;
- a noise whitening filter unit (301), configured to filter the received digital signal using the selected noise whitening filter; and
- a maximum likelihood sequence detector (306), referred to as MLSE detector, downstream of the noise whitening filter unit (301); wherein the MLSE detector (306) is configured to detect the symbol from the filtered digital signal at a given time instant, while taking into account one or more symbols of one or more previous time instants.

2. The detection unit (300) of any previous claim, wherein
- the first optical transmitted channel is a wavelength division multiplexing channel; and/or
- the digital signal has been derived from the optical signal using coherent optical detection; and/or
- first optical transmitted channel is implemented using a multi-mode fiber.

3. The detection unit (300) of any previous claim, wherein the MLSE detector (306) is configured to execute a Viterbi algorithm.

4. The detection unit (300) of any previous claim, wherein the noise whitening filter is a finite impulse response filter comprising N filter coefficients.

5. The detection unit (300) of any previous claim, further comprising
- an equalizing unit (102) upstream of the noise whitening filter unit (301) and configured to compensate chromatic distortion and/or polarization mode dispersion incurred by the optical signal in the first optical transmitted channel; and/or
- a polarization de-multiplexing unit (103) upstream of the noise whitening filter unit (301) and configured to de-multiplex multiple polarizations of the optical signal.

6. An optical receiver configured to detect a symbol from a received optical signal transmitted over a first optical transmitted channel and submitted to noise, the receiver comprising:
- a reception unit configured to convert the optical signal into a digital signal; and
- a detection unit (300) according to any of claims 1 to 5, wherein the detection unit (300) is configured to detect the symbol from the digital signal.

7. An optical network, comprising
- a first optical transmitted channel configured to transmit an optical signal; wherein the optical signal is submitted to noise;
- a control plane comprising information on an estimate of a power spectral density of the noise; and
- an optical receiver according to claim 6, configured to detect a symbol from the optical signal.

8. A method for detecting a symbol from a received digital signal, wherein the digital signal has been derived from an optical signal transmitted over a first optical transmitted channel and submitted to noise, the method comprising:
- receiving information on characteristics of the first optical transmitted channel, on characteristics of a lower adjacent optical transmitted channel, using a wavelength lower than a wavelength of the optical transmitted channel, and on characteristics of a higher adjacent optical transmitted channel, using a wavelength higher than the wavelength of the optical transmitted channel; wherein the characteristics are one or more of: baud rate, bandwidth, modulation scheme of a transmitted channel;
- providing a plurality of noise whitening filters associated with a plurality of estimates of the power spectral density of the noise, respectively; wherein the plurality of noise whitening filters allows the look up of a particular noise whitening filter in dependence of combinations of characteristics of the first optical transmitted channel, the lower adjacent optical transmitted channel, and the higher adjacent optical transmitted channel; wherein a particular noise whitening filter which is associated with a particular estimate of the power spectral density is configured to whiten noise having the particular estimate of the power spectral density;
- selecting a noise whitening filter from the plurality of noise whitening filters in dependency of the combination of the received characteristics;
- filtering the received digital signal using the selected noise whitening filter; and
- detecting the symbol from the filtered digital signal at a given time instant using maximum likelihood sequence detection, while taking into account one or more symbols of one or more previous time instants.

## Patentansprüche

1. Eine Detektionseinheit (300), die konfiguriert ist zum Erkennen eines Symbols aus einem empfangenen digitalen Signal, wobei das digitale Signal abgeleitet worden ist aus einem optischen Signal, das über einen ersten optischen Übertragungskanal gesendet worden ist und Rauschen ausgesetzt ist, wobei die Detektionseinheit (300) umfasst:
- eine Eigenschaften-Empfangseinheit (306), die konfiguriert ist zum Empfangen von Information über Eigenschaften des ersten optischen Übertragungskanals; von Eigenschaften eines niedrigeren benachbarten optischen Übertragungskanals unter Verwenden einer Wellenlänge, die niedriger ist als eine Wellenlänge des optischen Übertragungskanals; und von Eigenschaften eines höheren benachbarten optischen Übertragungskanals unter Verwenden einer Wellenlänge, die größer ist als die Wellenlänge des optischen Übertragungskanals; wobei die Eigenschaften eine oder mehrere sind aus: Baud-Rate, Bandweite, Modulationsschema eines Übertragungskanals;
- eine Filterbibliothek (305), die eine Vielzahl von Weißrauschfiltern umfasst, welche jeweils verbunden sind mit einer Vielzahl von Schätzungen der Sendeleistungsdichte des Rauschens; wobei die Filterbibliothek (305) eine Lookup-Tabelle ist, die es gestattet, einen bestimmten Weißrauschfilter in Abhängigkeit von Eigenschaftskombinationen des ersten optischen Übertragungskanals, des niedrigeren benachbarten optischen Übertragungskanals und des höheren benachbarten optischen Übertragungskanals nachzusehen; wobei ein bestimmter Weißrauschfilter, der mit einer bestimmten Schätzung der Sendeleistungsdichte verbunden ist, konfiguriert ist zum Weißen von Rauschen, das eine bestimmte Schätzung der Sendeleistungsdichte aufweist;
- eine Filterauswahleinheit (304), die konfiguriert ist zum Auswählen eines Weißrauschfilters aus der Filterbibliothek (305) in Abhängigkeit der Kombination der empfangenen Eigenschaften;
- eine Weißrausch-Filtereinheit (301), die konfiguriert ist zum Filtern des empfangenen digitalen Signals unter Verwenden des ausgewählten Weißrauschfilters; und
- einen Maximum-Likelihood-Sequence-Detektor (306), bezeichnet als MLSE-Detektor, stromabwärts der Weißrausch-Filtereinheit (301); wobei der MLSE-Detektor (306) konfiguriert ist zum Erkennen des Symbols aus dem gefilterten digitalen Signal zu einem gegebenen Zeitpunkt, während ein oder mehrere Symbole von einem oder mehreren vorherigen Zeitpunkten berücksichtigt werden.

2. Detektionseinheit (300) nach einem beliebigen der vorhergehenden Ansprüche, wobei
- der erste optische übertragene Kanal ein Wellenlängenmultiplexkanal ist; und/oder
- das digitale Signal abgeleitet worden ist aus dem optischen Signal unter Verwendung optischer Kohärenzerkennung; und/oder
- der erste optische übertragene Kanal implementiert wird unter Verwendung einer Multimode-Faser.

3. Detektionseinheit (300) nach einem beliebigen der vorhergehenden Ansprüche, wobei der MLSE-Detektor (306) konfiguriert ist zum Ausführen eines Viterbi-Algorithmus.

4. Detektionseinheit (300) nach einem beliebigen der vorhergehenden Ansprüche, wobei der Weißrauschfilter ein Filter mit endlicher Impulsantwort ist und N Filterkoeffizienten umfasst.

5. Detektionseinheit (300) nach einem beliebigen der vorhergehenden Ansprüche, weiterhin umfassend
- eine Entzerreinheit (102) stromaufwärts der Weißrausch-Filtereinheit (301), die konfiguriert ist zum Ausgleichen chromatischer Distorsion und/oder Polarisationsmodendispersion, entstanden durch das optische Signal in dem ersten optischen Übertragungskanal; und/oder
- eine Polarisation-Demultiplexeinheit (103) stromaufwärts der Weißrausch-Filtereinheit (301), die konfiguriert ist zum Entschachteln mehrerer Polarisationen des optischen Signals.

6. Optischer Empfänger, konfiguriert zum Erkennen eines Symbols aus dem empfangenen optischen Signal, das über einen ersten optischen Übertragungskanal übertragen worden ist und Rauschen ausgesetzt ist, wobei der Empfänger umfasst:
- eine Empfangseinheit, die konfiguriert ist zum Umwandeln des optischen Signals in ein digitales Signal; und
- eine Detektionseinheit (300) nach einem beliebigen der Ansprüche 1 bis 5, wobei die Detektionseinheit (300) konfiguriert ist zum Erkennen des Symbols aus dem digitalen Signal.

7. Optisches Netzwerk, umfassend
- einen ersten optischen Übertragungskanal, der konfiguriert ist zum Übertragen eines optischen Signals; wobei das optische Signal Rauschen ausgesetzt ist;
- eine Steuerebene, umfassend Information über eine Schätzung einer Sendeleistungsdichte des Rauschens; und
- einen optischen Empfänger nach Anspruch 6, konfiguriert zum Erkennen eines Symbols aus dem optischen Signal.

8. Verfahren zum Erkennen eines Symbols aus einem empfangenen digitalen Signal, wobei das digitale Signal abgeleitet worden ist aus einem optischen Signal, das über einen ersten optischen Übertragungskanal gesendet worden ist und Rauschen ausgesetzt ist, wobei das Verfahren umfasst:
- Empfangen von Information über Eigenschaften des ersten optischen Übertragungskanals, von Eigenschaften eines niedrigeren benachbarten optischen Übertragungskanals unter Verwenden einer Wellenlänge, die niedriger ist als eine Wellenlänge des optischen Übertragungskanals, und von Eigenschaften eines höheren benachbarten optischen Übertragungskanals unter Verwenden einer Wellenlänge, die größer ist als die Wellenlänge des optischen Übertragungskanals; wobei die Eigenschaften eine oder mehrere sind aus: Baud-Rate, Bandweite, Modulationsschema eines Übertragungskanals;
- Bereitstellen einer Vielzahl von Weißrauschfiltern, die mit einer Vielzahl von entsprechenden Schätzungen der Sendeleistungsdichte des Rauschens verbunden sind; wobei die Vielzahl von Weißrauschfiltern es gestattet, einen bestimmten Weißrauschfilter in Abhängigkeit der Kombinationen von Eigenschaften des ersten optischen Übertragungskanals, des niedrigeren benachbarten optischen Übertragungskanals und des höheren benachbarten optischen Übertragungskanals nachzusehen; wobei ein bestimmter Weißrauschfilter, der mit einer bestimmten Schätzung der Sendeleistungsdichte verbunden ist, konfiguriert ist zum Weiß von Rauschen, das eine bestimmte Schätzung der Sendeleistungsdichte aufweist;
- Auswählen eines Weißrauschfilters aus der Vielzahl von Weißrauschfiltern in Abhängigkeit der Kombination der empfangenen Eigenschaften;
- Filtern des empfangenen digitalen Signals unter Verwenden des ausgewählten Weißrauschfilters; und
- Erkennen des Symbols aus dem gefilterten digitalen Signal zu einem gegebenen Zeitpunkt unter Verwenden der Maximum-Likelihood-Sequence-Erkennung, während ein oder mehrere Symbole von einem oder mehreren vorherigen Zeitpunkten berücksichtigt werden.

## Revendications

1. Unité de détection (300) configurée pour détecter un symbole à partir d'un signal numérique reçu, dans laquelle le signal numérique a été dérivé d'un signal optique transmis sur un premier canal de transmission optique, et soumis à un bruit, l'unité de détection (300) comprenant :
- une unité de réception de caractéristiques (306) configurée pour recevoir des informations sur des caractéristiques du premier canal de transmission optique ; sur des caractéristiques d'un canal de transmission optique adjacent inférieur, en utilisant une longueur d'onde inférieure à une longueur d'onde du canal de transmission optique ; et sur des caractéristiques d'un canal de transmission optique adjacent supérieur, en utilisant une longueur d'onde supérieure à la longueur d'onde du canal de transmission optique ; dans laquelle les caractéristiques sont une ou plusieurs caractéristiques parmi : le débit en bauds, la bande passante, le schéma de modulation d'un canal de transmission ;
- une bibliothèque de filtre (305) comprenant une pluralité de filtres de blanchiment du bruit associés à une pluralité d'estimations de la densité spectrale de puissance du bruit, respectivement ; dans laquelle la bibliothèque de filtre (305) est une table de recherche permettant la recherche d'un filtre de blanchiment du bruit particulier en fonction de combinaisons de caractéristiques du premier canal de transmission optique, du canal de transmission optique adjacent inférieur, et du canal de transmission optique adjacent supérieur ; dans laquelle un filtre de blanchiment du bruit particulier qui est associé à une estimation particulière de la densité spectrale de puissance est configuré pour blanchir le bruit ayant l'estimation particulière de la densité spectrale de puissance ;
- une unité de sélection de filtre (304) configurée pour sélectionner un filtre de blanchiment du bruit à partir de la bibliothèque de filtre (305) en fonction de la combinaison des caractéristiques reçues ;
- une unité de filtre de blanchiment du bruit (301), configurée pour filtrer le signal numérique reçu en utilisant le filtre de blanchiment du bruit sélectionné ; et
- un détecteur de séquence à maximum de vraisemblance (306), appelé détecteur MLSE, en aval de l'unité de filtre de blanchiment du bruit (301) ; dans laquelle le détecteur MLSE (306) est configuré pour détecter le symbole à partir du signal numérique filtré à un moment donné, en tenant compte d'un ou de plusieurs symboles d'un ou de plusieurs moments précédents.

2. Unité de détection (300) selon l'une quelconque des revendications précédentes, dans lequel
- le premier canal de transmission optique est un canal de multiplexage par répartition en longueur d'onde ; et/ou
- le signal numérique a été dérivé du signal optique en utilisant la détection optique cohérente ; et/ou
- un premier canal de transmission optique est mis en oeuvre en utilisant une fibre multimode.

3. Unité de détection (300) selon l'une quelconque des revendications précédentes, dans laquelle le détecteur MLSE (306) est configuré pour exécuter un algorithme de Viterbi.

4. Unité de détection (300) selon l'une quelconque des revendications précédentes, dans laquelle le filtre de blanchiment du bruit est un filtre à réponse impulsionnelle finie comprenant N coefficients de filtre.

5. Unité de détection (300) selon l'une quelconque des revendications précédentes, comprenant en outre
- une unité d'égalisation (102) en amont de l'unité de filtre de blanchiment du bruit (301) et configurée pour compenser la distorsion chromatique et/ou la dispersion de mode de polarisation subie(s) par le signal optique dans le premier canal de transmission optique ; et/ou
- une unité de démultiplexage de polarisation (103) en amont de l'unité de filtre de blanchiment du bruit (301) et configurée pour démultiplexer des polarisations multiples du signal optique.

6. Récepteur optique configuré pour détecter un symbole à partir d'un signal optique reçu transmis sur un premier canal de transmission optique et soumis à un bruit, le récepteur comprenant :
- une unité de réception configurée pour convertir le signal optique en un signal numérique ; et
- une unité de détection (300) selon l'une quelconque des revendications 1 à 5, dans lequel l'unité de détection (300) est configurée pour détecter le symbole à partir du signal numérique.

7. Réseau optique, comprenant
- un premier canal de transmission optique configuré pour transmettre un signal optique ; dans lequel le signal optique est soumis à un bruit ;
- un plan de commande comprenant des informations sur une estimation d'une densité spectrale de puissance du bruit ; et
- un récepteur optique selon la revendication 6, configuré pour détecter un symbole à partir du signal optique.

8. Procédé de détection d'un symbole à partir d'un signal numérique reçu, dans lequel le signal numérique a été dérivé d'un signal optique transmis sur un premier canal de transmission optique et soumis à un bruit, le procédé comprenant les étapes suivantes :
- recevoir des informations sur des caractéristiques du premier canal de transmission optique, sur des caractéristiques d'un canal de transmission optique adjacent inférieur, en utilisant une longueur d'onde inférieure à une longueur d'onde du canal de transmission optique ; et sur des caractéristiques d'un canal de transmission optique adjacent supérieur, en utilisant une longueur d'onde supérieure à la longueur d'onde du canal de transmission optique ; dans lequel les caractéristiques sont une ou plusieurs caractéristiques parmi : le débit en bauds, la bande passante, le schéma de modulation d'un canal de transmission ;
- fournir une pluralité de filtres de blanchiment du bruit associés à une pluralité d'estimations de la densité spectrale de puissance du bruit, respectivement ; dans lequel la pluralité de filtres de blanchiment du bruit permet la recherche d'un filtre de blanchiment du bruit particulier en fonction de combinaisons de caractéristiques du premier canal de transmission optique, du canal de transmission optique adjacent inférieur, et du canal de transmission optique adjacent supérieur ; dans lequel un filtre de blanchiment du bruit particulier qui est associé à une estimation particulière de la densité spectrale de puissance est configuré pour blanchir le bruit ayant l'estimation particulière de la densité spectrale de puissance ;
- sélectionner un filtre de blanchiment du bruit à partir de la pluralité de filtres de blanchiment du bruit en fonction de la combinaison des caractéristiques reçues ;
- filtrer le signal numérique reçu en utilisant le filtre de blanchiment du bruit sélectionné ; et
- détecter le symbole à partir du signal numérique filtré à un moment donné en utilisant la détection de séquence à maximum de vraisemblance, tout en tenant compte d'un ou de plusieurs symboles d'un ou de plusieurs moments précédents.
